# EUROPÄISCHE PATENTSCHRIFT

(11) **EP 1 240 240 B1**
(45) Veröffentlichungstag und Bekanntmachung des Hinweises auf die Patenterteilung: **19.04.2006**
(21) Anmeldenummer: 00972840.3
(22) Anmeldetag: 23.10.2000
(51) Int. Cl.: C08J 5/18, C08L 69/00

(54) **POLYCARBONAT-SUBSTRATE**
POLYCARBONATE SUBSTRATES
SUBSTRATS EN POLYCARBONATE

(30) Priorität: 03.11.1999 DE 19952851
(43) Veröffentlichungstag der Anmeldung: 18.09.2002
(73) Patentinhaber: Bayer MaterialScience AG, 51368 Leverkusen (DE); BAYER ANTWERPEN N.V., 2040 Antwerpen (BE)
(72) Erfinder: BÖDIGER, Michael, 41539 Dormagen (DE); KÜHLING, Steffen, B-9100 Sint-Niklaas (BE); BRUYNSEELS, Franky, B-9170 Sint-Gillis-Waas (BE); VAN MEIRVENNE, Dirk, B-9100 Nieuwkerken-Waas (BE); DE CLEYN, Réne, B-2990 Wuustwezel (BE)
(86) Internationale Anmeldenummer: PCT/EP2000/010400
(87) Internationale Veröffentlichungsnummer: WO 2001/032754

(56) Entgegenhaltungen:
- EP-A- 0 359 953
- EP-A- 0 380 002

## Beschreibung

Die Erfindung betrifft Polycarbonat-Substrate hergestellt auf Basis von 1,1-Bis-(4-hydroxyphenyl)-3,3,5-trimethylcyclohexan sowie deren Verwendung zur Herstellung von Formkörpern mit besonders hoher Reinheit und extrem hoher Oberflächenbrillianz sowie die aus dem Polycarbonat-Substrat herstellbaren Formkörper.

Für bestimmte Formkörper wie insbesondere Verscheibungen für Kraftfahrzeuge und Streuscheiben für Kraftfahrzeug-Reflektoren, bei denen eine hohe Lichttransmission ohne Störstellen im Formteil von enormer Wichtigkeit sind wird hochreines Polycarbonat benötigt.

Polycarbonat wird nach dem sogenannten Phasengrenzflächenverfahren hergestellt, dabei werden Dihydroxydiarylalkane in Form ihrer Alkalisalze mit Phosgen in heterogener Phase in Gegenwart von anorganischen Basen wie Natronlauge und einem organischen Lösungsmittel, in dem das Produkt Polycarbonat gut löslich ist, umgesetzt. Während der Reaktion ist die wäßrige Phase in der organischen Phase verteilt und nach der Reaktion wird die organische, Polycarbonat enthaltende Phase mit einer wäßrigen Flüssigkeit gewaschen, wobei unter anderem Elektrolyte entfernt werden sollen, und die Waschflüssigkeit anschließend abgetrennt.

In EP-A 380 002 werden optische Scheiben aus Polycarbonat beschrieben. Das verwendete Polycarbonat weist Metallgehalte der ersten und achten Gruppe des Periodensystems von weniger als 1 ppm auf. Um derartig niedrige Metallgehalte zu erhalten wird das Polycarbonat nach dessen Herstellung gewaschen und filtriert.

EP-A 359 953 offenbart die Herstellung von Polycarbonaten aus Diphenolen nach der bekannten Zweiphasengrenzflächen-Polykondensation. Dabei wird die erhaltene organische Phase abgetrennt, gewaschen und eingedampft.

In der japanischen Anmeldung JP-A 07 19 67 83 wird ein Verfahren zur Herstellung von Polycarbonat beschrieben, bei dem zur Erzielung eines günstigen Farbverhaltens der Gehalt von Eisen in der eingesetzten Natronlauge unterhalb von 2 ppm liegen soll.

Die Aufgabe der vorliegenden Erfindung ist die Bereitstellung eines alternativen und verbesserten Verfahrens zur Herstellung von reinem Polycarbonat-Substraten sowie die Bereitstellung von Polycarbonat-Formkörpem mit besonders hoher Reinheit.

Überraschenderweise wurde nun gefunden, dass aus Polycarbonat-Substraten hergestellt auf Basis von 1,1-Bis-(4-hydroxyphenyl)-3,3,5-trimethylcyclohexan mit mittleren Molekulargewichten von 25.000 bis 400.000, die nach einem speziellen Verfahren hergestellt werden, Polycarbonat-Formkörper mit besonders hoher Oberflächenbrillianz und Reinheit erhalten werden.

Die Polycarbonat-Substrate werden erhalten, wenn nach einem speziellen Verfahren gearbeitet wird.

Gegenstand der Anmeldung ist daher ein Verfahren zur Herstellung von Polycarbonat auf Basis von 1,1-Bis-(4-hydroxyphenyl)-3,3,5-trimethylcyclohexan nach dem Phasengrenzflächenverfahren, wobei Dihydroxydiarylalkane in Form ihrer Alkalisalze mit Phosgen in heterogener Phase in Gegenwart von Natronlauge und einem organischen Lösungsmittel umgesetzt werden, dadurch gekennzeichnet, dass
a) die Einsatzstoffe arm an Fe-, Cr-, Ni-, Zn-, Ca-, Mg-, Al-Metallen oder ihren Homologen sind, wobei nicht mehr als 2 ppm insgesamt in den Einsatzstoffen enthalten sind,
b) das organische Lösungsmittel abgetrennt und
c) das erhaltene Polycarbonat aufgearbeitet wird;
d) gegebenenfalls nach Filtration der Reaktionsmischung die bei der Reaktion entstehende wäßrige Phase abgetrennt und die abgetrennte organische Polycarbonat-Phase gegebenenfalls nach Filtration mit einer wäßrigen Flüssigkeit gewaschen und
e) die gewaschene und von der Waschflüssigkeit abgetrennte organische Polycarbonat-Phase, gegebenenfalls nach einer Filtration, erwärmt und mindestens einmal heiß filtriert wird.

Bevorzugt ist nicht mehr als 1 ppm und besonders bevorzugt nicht mehr als 0,5 ppm und ganz besonders bevorzugt nicht mehr als 0,2 ppm Gesamt-Metall, insbesondere der oben aufgezählten Metalle und deren Homologen in den Einsatzstoffen enthalten. Von diesen Grenzwerten sind die Alkalimetalle ausgenommen.

Bevorzugt sollte der Einsatzstoff Natronlauge arm an den genannten Metallen sein. Insbesondere sollte bezogen auf einen 100 gew.-%-igen NaOH-Gehalt die Natronlauge jeweils nicht mehr als 1 ppm, vorzugsweise nicht mehr als 0,5 ppm, bevorzugt nicht mehr als 0,3 ppm an Erdalkalimetall oder dessen Homologen enthalten. Insbesondere sollte der Einsatzstoff Natronlauge bezogen auf einen 100 gew.%-igen NaOH-Gehalt nicht mehr als 1 ppm, vorzugsweise nicht mehr als 0,5 ppm, bevorzugt nicht mehr als 0,1 ppm Eisen enthalten.

Die Natronlauge wird im erfindungsgemäßen Verfahren vorzugsweise als 20-55 gew.%ige, besonders bevorzugt 30-50 gew.-%ige Lösung eingesetzt.

Natronlauge mit den oben angegebenen Grenzwerten ist nach dem literaturbekannten Membranverfahren erhältlich.

In einer bevorzugten Ausführungsform sind neben der Natronlauge auch die Einsatzstoffe Bisphenol, insbesondere Bisphenol und Wasser, ganz besonders bevorzugt das Bisphenol, Wasser und das organische Lösungsmittel metallarm, insbesondere arm an Fe, Cr, Ni, Zn, Ca, Mg, Al.

Dabei sind auch Ausführungsformen eingeschlossen, bei denen aus Natronlauge und Bisphenol(en) vorher Natriumbisphenolat(lösung) hergestellt wurde.

Diese metallarmen Einsatzstoffe werden dadurch erhalten, dass das Lösungsmittel in einer bevorzugten Variante destilliert, das Bisphenol kristallisiert, bevorzugt mehrfach kristallisiert oder destilliert und Wasser in VE-Qualität eingesetzt wird.

Das VE-Wasser ist vorzugsweise entsalzt, entgast und/oder entkieselt. Als Qualitätskriterium dient z.B. die elektrische Leitfähigkeit (Summenparameter für ionogene Stoffe der noch in Spuren im Wasser vorhandenen Salze) wobei im erfindungsgemäßen Verfahren das VE-Wasser durch eine elektrische Leitfähigkeit von 0,2 µS/cm (DIN 38404 C 8) und einer SiO₂-Konzentration von 0,02 mg/kg (VGB 3.3.1.1) oder jeweils weniger gekennzeichnet ist.

Der Gehalt an gelöstem Sauerstoff im VE-Wasser beträgt vorzugsweise weniger als 1 ppm, bevorzugt weniger als 100 ppb.

In einer weiter bevorzugten Ausführungsform werden aus der Gruppe der Einsatzstoffe mindestens die Natronlauge, bevorzugt zusätzlich auch das Bisphenol, besonders bevorzugt die Natronlauge, das Bisphenol und das Wasser, ganz besonders bevorzugt die Natronlauge, das Bisphenol, das Wasser und das organische Lösungsmittel mindestens einmal, bevorzugt zweimal, besonders bevorzugt stufenweise dreimal vor dem Beginn der Reaktion filtriert.

In einer bevorzugten Ausführungsform wird in Verfahrensschritt d) direkt nach der Reaktion die Reaktionsmischung filtriert und/oder die erhaltene und abgetrennte organische Polycarbonat-Phase filtriert und/oder die in Verfahrensschritt e) abgetrennte organische Polycarbonat-Phase filtriert.

Vorzugsweise werden mindestens zwei dieser Filtrationen, insbesondere alle drei Filtrationen durchgeführt.

In einer bevorzugten Variante wird, insbesondere bei der Heißfiltration, mindestens einmal, bevorzugt zweimal, besonders bevorzugt mindestens dreimal, insbesondere stufenweise filtriert. Bei der stufenweise Filtration beginnt man mit gröberen Filtern, um dann zu feineren Filtern zu wechseln. Bevorzugt ist, dass man die Filtration der zweiphasigen Medien in Verfahrensschritt d) mit gröberen Filtern durchführt.

Im Verfahrensschritt e) werden für die Heißfiltration Filter mit kleiner Porengröße eingesetzt. Hierfür ist wichtig, dass die Polycarbonat-Phase als möglichst homogene Lösung vorliegt. Dies wird durch Erwärmen der, im allgemeinen noch Reste von wäßriger Waschflüssigkeit enthaltenden, organischen Polycarbonat-Phase erreicht. Dabei wird die Waschflüssigkeit gelöst und eine klare Lösung entsteht. Die zuvor gelösten Verunreinigungen, insbesondere die gelösten Alkalisalze, fallen aus und können abfiltriert werden.

Zur Erreichung einer homogenen Lösung kann neben dem oben beschrieben Verfahren auch das bekannte Ausfrier-Verfahren eingesetzt werden.

Zur Durchführung der erfindungsgemäßen Filtration werden Membranfilter und Sintermetallfilter oder auch Beutelfilter als Filter eingesetzt. Die Porengröße der Filter betragen in der Regel 0,01 bis 5 µm, vorzugsweise 0,02 bis 1,5 µm, bevorzugt etwa 0,05 µm bis 1,0 µm. Solche Filter sind im Handel beispielsweise von den Firmen Pall GmbH, D-63363 Dreieich, und Krebsböge GmbH, D-42477 Radevormwald, (Typ SIKA-R CU1AS) erhältlich.

Durch die Kombination der erfindungsgemäßen Verfahren werden deutlich bessere Filterstandzeiten erhalten.

Die Durchführung der anderen Verfahrensschritte ist im allgemeinen bekannt. So wird während der Reaktion die wäßrige Phase in der organischen Phase emulgiert. Dabei entstehen Tröpfchen unterschiedlicher Größe. Nach der Reaktion wird die organische, das Polycarbonat enthaltende Phase, üblicherweise mehrmals mit einer wäßrigen Flüssigkeit gewaschen und nach jedem Waschvorgang von der wäßrigen Phase soweit wie möglich getrennt. Die Wäsche erfolgt bevorzugt mit feinstfiltrietem, metallarmen Wasser. Die Polymerlösung ist nach der Wäsche und Abtrennung der Waschflüssigkeit üblicherweise trüb. Als Waschflüssigkeit werden wäßrige Flüssigkeit zur Abtrennung des Katalysators, eine verdünnte Mineralsäure wie HCl oder H₃PO₄ und zur weiteren Reinigung vollentsalztes Wasser eingesetzt. Die Konzentration von HCl oder H₃PO₄ in der Waschflüssigkeit kann beispielsweise 0,5 bis 1,0 Gew.-% betragen. Die organische Phase wird beispielhaft und vorzugsweise fünfinal gewaschen.

Als Phasentrennvorrichtungen zur Abtrennung der Waschflüssigkeit von der organischen Phase können grundsätzlich bekannte Trenngefäße, Phasenseparatoren, Zentrifugen oder Coalescer oder auch Kombinationen dieser Einrichtungen verwendet werden.

Zum Erhalt des hochreinen Polycarbonats wird das Lösungsmittel abgedampft. Das Abdampfen kann in mehreren Verdampferstufen erfolgen. Gemäß einer weiteren bevorzugten Ausflihrungsform dieser Erfindung kann das Lösungsmittel oder ein Teil des Lösungsmittels durch Sprühtrocknung entfernt werden. Das hochreine Polycarbonat fällt dann als Pulver an. Gleiches gilt für die Gewinnung des hochreinen Polycarbonats durch Fällung aus der organischen Lösung und anschließender Resttrocknung. Beispielsweise ist die Extrusion ein geeignetes Mittel zur Verdampfung von Restlösungsmittel. Eine andere Technologie stellt die Strangverdampfertechnologie dar.

Als Bisphenole werden 1,1-Bis-(4-hydroxyphenyl)-3,3,5-trimethylcyclohexan sowie 2,2-Bis-(4-hydroxyphenyl)-propan (BPA/Bisphenol-A) gegebenenfalls deren Gemische eingesetzt, wobei das 1,1-Bis-(4-hydroxyphenyl)-3,3,5-trimethylcyclohexan immer in Mengen >0,1 Mol-% anwesend ist. Bevorzugte 1,1-Bis-(4-hydroxyphenyl)-3,3,5-trimethylcyclohexankonzentrationen liegen bei 10-100 Mol-%. Die erfindungsgemäß einzusetzenden Bisphenolverbindungen werden mit Kohlensäureverbindungen, insbesondere Phosgen, umgesetzt.

Die Polyestercarbonate werden durch Umsetzung der bereits genannten Bisphenole, mindestens einer aromatischen Dicarbonsäure und gegebenenfalls Kohlensäure erhalten. Geeignete aromatische Dicarbonsäuren sind beispielsweise Orthophtalsäure, Terephthalsäure, Isophthalsäure, 3,3'- oder 4,4'-Diphenyldicarbonsäure und Benzophenondicarbonsäuren.

In dem Verfahren verwendete inerte organische Lösungsmittel sind beispielsweise Dichlormethan, die verschiedenen Dichlorethane und Chlorpropanverbindungen, Chlorbenzol und Chlortoluol, vorzugsweise werden Dichlormethan und Gemische aus Dichlormethan und Chlorbenzol eingesetzt.

Die Reaktion kann durch Katalysatoren, wie tertiäre Amine, N-Alkylpiperidine oder Oniumsalze beschleunigt werden. Bevorzugt werden Tributylamin, Triethylamin und N-Ethylpiperidin verwendet. Als Kettenabbruchmittel und Molmassenregler können ein monofunktionelles Phenol, wie Phenol, Cumylphenol, p.-tert.-Butylphenol oder 4-(1,1,3,3-Tetramethylbutyl)phenol verwendet werden. Als Verzweiger kann beispielsweise Isatinbiscresol eingesetzt werden.

Zur Herstellung der hochreinen Polycarbonate werden die Bisphenole in wäßriger alkalischer Phase, vorzugsweise Natronlauge, gelöst. Die gegebenenfalls zur Herstellung von Copolycarbonaten erforderlichen Kettenabbrecher werden in Mengen von 1,0 bis 20,0 Mol-% je Mol Bisphenol, in der wäßrigen alkalischen Phase gelöst oder zu dieser in einer inerten organischen Phase in Substanz zugegeben. Anschließend wird Phosgen in den die übrigen Reaktionsbestandteile enthaltenden Mischer eingeleitet und die Polymerisation durchgeführt.

Gegebenenfalls einzusetzende Kettenabbrecher sind sowohl Monophenole als auch Monocarbonsäuren. Geeignete Monophenole sind Phenol selbst, Alkylphenole wie Kresole, p-tert.-Butylphenol, p-Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol sowie deren Mischungen.

Geeignete Monocarbonsäuren sind Benzoesäure, Alkylbenzoesäuren und Halogenbenzoesäuren.

Bevorzugte Kettenabbrecher sind die Phenole der Formel (I) 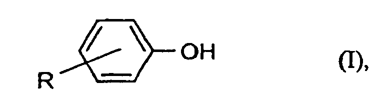 worin
- R: Wasserstoff, tert.-Butyl oder ein verzweigter oder unverzweigter C₈- und/oder C₉-Alkylrest ist.

Bevorzugter Kettenabbrecher ist Phenol und p-tert.-Butylphenol.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Gegebenenfalls kann der Reaktion noch Verzweiger zugesetzt werden. Bevorzugte Verzweiger sind die in der Polycarbonatchemie bekannten tri- oder mehr als trifunktionellen Verbindungen, insbesondere solche mit drei oder mehr als drei phenolischen OH-Gruppen.

Verzweiger sind beispielhaft und vorzugsweise auch Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden.

Ein Teil, bis zu 80 Mol-%, vorzugsweise von 20 bis 50 Mol-% der Carbonat-Gruppen in den Polycarbonaten können durch aromatische Dicarbonsäureester-Gruppen ersetzt sein.

Die erfindungsgemäßen Polycarbonate sind sowohl Homopolycarbonate als auch Copolycarbonate und deren Gemische. Die erfindungsgemäßen Polycarbonate können aromatische Polyestercarbonate sein oder Polycarbonate, die im Gemisch mit aromatischen Polyestercarbonaten vorliegen. Der Begriff Polycarbonat steht stellvertretend für die nach den erfindungsgemäßen Verfahren erhältlichen Polycarbonat-Substrate.

Die Polycarbonate haben mittlere Molekulargewichte M_{w} (ermittelt durch Messung der relativen Viskosität bei 25°C in Dichlormethan und einer Konzentration von 0,5 g Polycarbonat/100 ml Dichlormethan) von 12.000 bis 400.000, vorzugsweise von 23.000 bis 80.000 und insbesondere von 24.000 bis 40.000.

Erfindungsgemäße Formkörper aus den erfindungsgemäßen hochreinen Polycarbonat-Substraten sind insbesondere Verscheibungen für Kraftfahrzeuge und Streuscheiben für Automobil-Reflektoren, bei denen eine hohe Lichttransmission ohne Störstellen im Formteil von enormer Wichtigkeit sind. Hergestellt werden diese Formkörper durch Spritzgußverfahren, Extrusionsverfahren und Extrusions-Blasformverfahren unter Verwendung des erfindungsgemäßen Polycarbonats mit dem geeigneten Molekulargewicht.

Die erfindungsgemäßen Formkörper und Folien zeichnen sich durch eine extrem niedrige Fehlerrate beim Folien-Laser-Scan-Test und eine extrem niedrige Trübung von weniger als 0,5 %, insbesondere 0,4 % der Trübungsmessung aus. Die erfindungsgemäßen Formkörper weisen weniger als 300, insbesondere weniger als 250, bevorzugt weniger als 150 Störstellen pro m² gemessen an einer 200 µm Extrusionsfolie auf.

Die nachfolgende Beispiele dienen zur Erläuterung der Erfindung. Die Erfindung ist nicht auf die Beispiele beschränkt.

### Beispiele

Zur Herstellung der Polycarbonate wird eine wäßrige Natriumbisphenolat/Dinatrium-1,1-Bis-(4-hydroxylatphenyl)-3,3-dimethyl-5-methylcyclohexanlösung (57 Mol-%:43 Mol-%) aus 1,1- Bis-(4-hydroxylatphenyl)-3,3-dimethyl-5-methylcyclohexan (wird vor dem Lösevorgang in einem Rührkessel durch 5maliges Vakuumziehen und Bestickstoffen vom Restsauerstoff befreit) und Natronlauge unter Sauerstoffausschluß aufgelöst und diese, mit einer Lösung von BPA (BPA wird als Schmelze kontinuierlich mit Natronlauge zusammengebracht) in Natronlauge unter Sauerstoffausschluß gemischt. Die eingesetzte Natronlauge weist unterschiedliche Konzentrationen und Reinheiten (s. Tab.1) auf, wobei zur Lösung der Bisphenole die Ursprungs-Natronlauge noch weiter auf eine 6,5%ige Natronlauge verdünnt wird. Diese Natriumbisphenolatlösung wird nun über einen 0,6 µa Filter filtriert und in die Polycarbonatreaktion eingesetzt. Nach der Reaktion wird die Reaktionslösung über einen 1,0 µnom Beutefilter filtriert und der Wäsche zugeführt. Hier wird mit 0,6%iger Salzsäure gewaschen und anschließend mit filtriertem VE-Wasser noch 5 mal nachgewaschen. Die organische Lösung wird von der wäßrigen abgetrennt und nach dem Erwärmen der organischen Lösung auf 55°C zuerst mit 0,6 µa Filter und anschließend über ein 0,2 µa Filter filtriert. Nach der Isolierung wird das Poly-1,1-bis-(4-hydroxylphenyl)-3,3-dimethyl-5-methylcyclohexan-co-2,2-bis-(4-hydroxylphenyl)-propancarbonat erhalten. Das erhaltene Polycarbonat weist ein mittleres Molekulargewicht M_{w} von 31.000 auf.

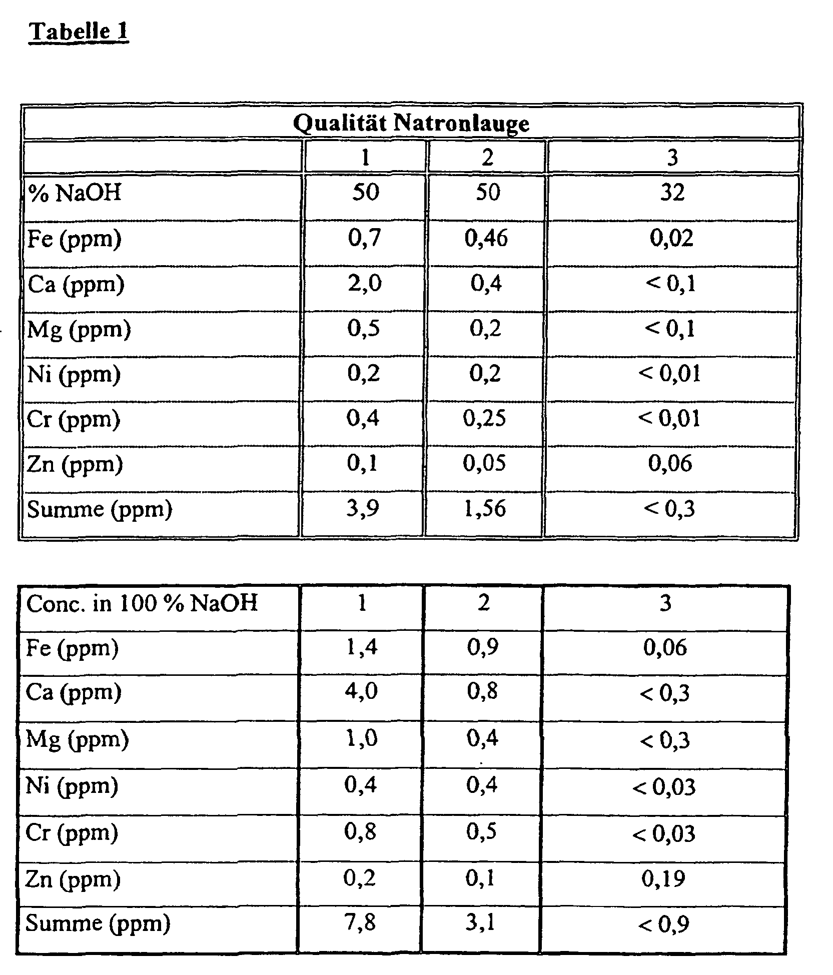

Die Filterstandzeiten für verschiedene Filterstandorte betragen für die einzelnen Fälle:

**Tabelle 2**

| | Natronlauge hergestellt aus Versuch | | |
|---|---|---|---|
| Filterstandzeiten | 1 | 2 | 3 |
| Vor der Reaktion 0,6 µa-Filter | 12 h | 10 d | 30 d |
| Nach der Reaktion 1,0 µa-Filter | 24 h | 30 d | > 60 d |
| Endfilter 1 = 0,6 µa-Filter | 12 h | 3 d | 21 d |
| Endfilter2 = 0,2 µa-Filter | | | |

Aus den Polycarbonaten hergestellt mit Natronlauge aus Versuch 1 bis 3 werden nun Folien extrudiert und diese, mittels der bekannten Methode, einem Folien-Laser Scan Test unterzogen. Die Extrusionsfolie ist 200 µm dick und 60 mm breit. Ein He-Ne-Laser ("Spotdiameter" von 0,1 mm) tastet die Folie, mit einer Scanfrequenz von 5000 Hz in der Breiterichtung und einer Transportgeschwindigkeit von 5 m/s in der Längsrichtung, ab. Dabei werden alle Störstellen, die eine Streuung des durchgehenden Laserstrahls (ab 0,10 mm Durchmesser) bewirken, durch einen Photomultiplier detektiert und softwaremäßig gezählt. Die Anzahl optische Störstellen pro kg Polycarbonat bzw. pro m² Folie, ist ein Maß für die Oberflächenqualität dieser Folie bzw. Reinheit des PCs.

| **Auswertung Extrusionsfolie mit Laserscanner** | | | |
|---|---|---|---|
| | PC hergestellt mit Natronlauge aus Versuch | | |
| # pro m² Oberfläche | 1 | 2 | 3 |
| 0,10 - 0,30 mm | 194 | 99 | 53 |
| >0,30 mm | 216 | 128 | 72 |
| Summe | 410 | 227 | 125 |

Aus den Polycarbonaten hergestellt mit Natronlauge aus den Versuchen 1 bis 3 werden Massivplatten für Automobilverscheibung und Scheinwerfer hergestellt. Die mit Natronlauge aus Versuch 3 hergestellten Polycarbonate weisen einen geringeren Blendlichtanteil und eine höhere Lichtausbeute auf.

Aus den Polycarbonaten unterschiedlicher Qualitätsgüte werden Farbmusterplättchen hergestellt. Die Farbmusterplättchen weisen, nach ASTM D1003, eine unterschiedliche Trübung aus. Die Farbmusterplättchen (4 mm Dicke), die mit Natronlauge aus Versuch 3 hergestellten Polycarbonaten, weisen eine besonders niedrige Trübung von 0,4 % aus, was in der Anwendung als Verscheibung/ Streulichtscheibe zu geringerer diffuser Lichtstreuung führt.

## Patentansprüche

1. Verfahren zur Herstellung von Polycarbonat auf Basis von 1,1-Bis-(4-hydroxyphenyl)-3,3,5-trimethylcyclohexan nach dem Phasengrenzflächenverfahren, wobei Dihydroxydirarylalkane in Form ihrer Alkalisalze mit Phosgen in heterogener Phase in Gegenwart von Natronlauge und einem organischen Lösungsmittel umgesetzt werden, **dadurch gekennzeichnet, dass**
a) die Einsatzstoffe arm an Fe-, Cr-, Ni-, Zn-, Ca-, Mg-, Al-Metallen oder ihren Homologen sind, wobei nicht mehr als 2 ppm insgesamt in den Einsatzstoffen enthalten sind,
b) das organische Lösungsmittel abgetrennt und
c) das erhaltene Polycarbonat aufgearbeitet wird,
d) gegebenenfalls nach Filtration der Reaktionsmischung die bei der Reaktion entstehende wäßrige Phase abgetrennt und die abgetrennte organische Polycarbonat-Phase gegebenenfalls nach Filtration mit einer wäßrigen Flüssigkeit gewaschen wird,
e) die gewaschene und von der Waschflüssigkeit abgetrennte organische Polycarbonat-Phase, gegebenenfalls nach einer Filtration, erwärmt und mindestens einmal heiß filtriert wird.

## Revendications

1. Procédé de production de polycarbonate à base de 1,1-bis-(4-hydroxyphényl)-3,3,5-triméthylcyclohexane selon le procédé d'interphase, dans lequel on fait réagir des dihydroxydiarylalcanes sous la forme de leurs sels de métaux alcalins avec du phosgène en phase hétérogène, en présence de soude caustique et d'un solvant organique, **caractérisé en ce que**
a) les matières de départ sont pauvres en métaux fer, chrome, nickel, zinc, calcium, magnésium et aluminium ou leurs homologues, qui sont contenus dans les matières de départ en proportions n'excédant pas 2 ppm au total,
b) le solvant organique est séparé et
c) le polycarbonate obtenu fait l'objet d'un traitement ultérieur,
d) le cas échéant après filtration du mélange réactionnel, la phase aqueuse formée lors de la réaction est séparée et la phase polycarbonate organique séparée est, le cas échéant après filtration, lavée avec un liquide aqueux,
e) la phase polycarbonate organique lavée et séparée du liquide de lavage est, le cas échéant après filtration, chauffée et filtrée à chaud au moins une fois.

## Claims

1. A process for preparing polycarbonate based on 1,1-bis-(4-hydroxyphenyl)-3,3,5-trimethylcyclohexane using the phase boundary process, wherein dihydroxydiarylalkanes in the form of their alkali metal salts are reacted with phosgene in heterogeneous phase in the presence of caustic soda solution and an organic solvent, **characterised in that**
a) the feedstocks are low in Fe, Cr, Ni, Zn, Ca, Mg, Al metals or their homologues, wherein not more than a total of 2 ppm are present in the feedstocks,
b) the organic solvent is separated and
c) the polycarbonate obtained is processed,
d) optionally after filtration of the reaction mixture, the aqueous phase being produced during reaction is separated and, optionally after filtration, the separated organic polycarbonate phase is washed with an aqueous liquid,
e) the organic polycarbonate phase, washed and separated from the wash liquid, and optionally after filtration, is heated and filtered hot at least once.
